# EUROPÄISCHE PATENTANMELDUNG

(11) **EP 2 666 656 A1**
(43) Veröffentlichungstag der Anmeldung: **27.11.2013**
(21) Anmeldenummer: 13179801.9
(22) Anmeldetag: 10.02.2006
(51) Int. Cl.: B60K 15/04

(54) **Einfüllstutzen eines Tanks eines Kraftfahrzeugs**

(30) Priorität: 10.02.2005 DE 202005002223 U; 12.11.2005 EP 05110674
(62) Teilanmeldung aus: 06708206.5
(71) Anmelder: Gerdes GmbH, 50170 Kerpen (DE)
(72) Erfinder: Gerdes, Ralf, 50937 Köln (DE)
(74) Vertreter: Bungartz, Klaus Peter

(57) **Zusammenfassung**

Die Erfindung betrifft einen Einfüllstutzen eines Tanks eines Kraftfahrzeugs mit einem, mit dem Tank verbundenen Rohrstutzen (23) und einem deckellos verschließbaren Stutzenabschluss.

Die bekannten Einfüllstutzen haben den Nachteil, dass der deckellose Stutzenabschluss nicht austauschbar ist. Die verbessert die Erfindung dadurch, dass einerseits zur Bildung einer Sicherung gegen Befüllen mit ungeeignetem Kraftstoff im Stutzenabschluss eine obere Abdeckung (6) vorgesehen ist, die im geschlossenen Zustand durch wenigstens ein Verriegelungsmittel (7) blockiert ist und das Verriegelungsmittel (7) derart ausgebildet ist, dass in Abhängigkeit der Form des Ausgaberohrs (4) der Zapfpistole nur bei Befüllung mit geeignetem Kraftstoff entriegelbar ist und dass zum anderen der Stutzenabschluss über eine nicht ohne Zerstörung oder ohne Spezialwerkzeug lösbare Verbindung mit dem Rohrstutzen (23) verbunden ist.

## Beschreibung

### Technisches Gebiet

Die Erfindung betrifft einen Einfüllstutzen eines Tanks eines Kraftfahrzeugs mit einem deckellosen Stutzenabschluss nach dem Oberbegriff des Anspruch 1.

### Stand der Technik

Einfüllstutzen mit einem deckellosen Stutzenabschluss sind aus der DE 203 09 799 U1 bekannt. Bei diesem Stutzenabschluss wird der Stutzen über zwei Klappen verschlossen, die übereinander im Stutzen angeordnet sind und durch die Kraft jeweils einer Verschlussfeder in Anlage an eine Dichtfläche gehalten sind. Durch Einstecken des Ausgaberohrs einer Zapfpistole oder einer Tülle eines Reservekanisters werden die beiden Klappen nach unten gedrückt, so dass sich eine durchgängige Öffnung ergibt.

Obwohl diese Verschlüsse eine gute Dichtung auch ohne zusätzlichen Tankdeckel bieten, wäre es doch wünschenswert, wenn sie weiter verbessert werden könnten und zusätzlich eine Sicherung gegen Fehlbetankung aufweisen würden. Insbesondere im Falle moderner Motoren ist es zunehmen wichtig, auf die sichere Kraftstoffsorte zu achten, da beispielsweise moderne Einspritzsystem einer Common-Rail-Dieseleinspritzung über den Schmierstoffgehalt des Dieseltreibstoffs geschmiert werden und bereits nach kurzer Betriebszeit mit einem Ottokraftstoff schweren Schaden nehmen können.

Ein Stutzenaufsatz mit einer Dichtklappe, der über eine Rastverbindung auf einen Rohrstutzen aufsteckbar ist, ist aus der EP 0 602 440 A1 bekannt. Hierbei ist der Aufsatz eine Rastzunge auf, die bei Aufstecken auf den Rohrstutzen eine Kante hintergreift, wobei diese Verbindung dann nicht mehr lösbar ist, ohne den Rohrstutzen zu zerstören.

Aus der US 5 884 958 ist ein Stutzenabschluss mit einer schwenkbaren Dichtklappe bekannt, der auf einen Rohrstutzen aufgesteckt wird, wobei nach außen hervorspringende Federzungen nach einem definierten Einsteckweg in seitliche Fenster einfedern und so eine Blockade gegen zu tiefes Einschieben bilden. Dieser Aufsatz hat den Nachteil, dass er vergleichsweise einfach wieder vom Rohrstutzen abgezogen werden kann, da die Federzungen keine Rückhaltekraft in Löserichtung aufbringen können.

Aus der WO 01/68397 A1 ist ein Rohrstutzen bekannt, an dessen oberen Ende ein über eine Rastverbindung gesicherter Einsatz vorgesehen ist, in den eine Verschlusskappe ein geschraubt werden kann. Dieser Einsatz dient im Wesentlichen der Führung der Zapfpistole und bietet keinen deckellosen Verschluss.

Alle Vorrichtungen des Standes der Technik haben den Nachteil, dass sie dann, wenn Sie einen hinreichend sicheren, deckellosen Verschluss aufweisen, nicht austauschbar ausgebildet sind. Gerade dann kann es aber passieren, dass die vergleichsweise aufwändige Mechanik durch Fehlbedienung oder Verschleiß beschädigt wird und somit der gesamte Rohrstutzen ausgetauscht werden müsste. Die austauschbaren Einsätze wiederum bieten keinen deckellosen Verschluss bzw. keine Möglichkeit, von dem Rohrstutzen oder Zerstörung getrennt zu werden.

### Kurzbeschreibung der Erfindung

Aufgabe der Erfindung ist es daher, einen Einfüllstutzen zu schaffen, der einerseits bei möglichst sicherem Verschluss des Stutzens die Möglichkeit bietet, die Gefahr einer Fehlbetankung zu minimieren und andererseits von Fachpersonal austauschbar ist.

Diese Aufgabe wird nach der Erfindung durch einen Einfüllstutzen nach Anspruch 1 gelöst.

Erfindungsgemäß ist nun der deckellose Einfüllstutzen in Verbindung mit den bereits bekannten Tankstutzen oder auf den Rohrstutzen über eine lösbare Verbindung aufsetzbar. Erfahrungsgemäß ist die grundlegende Änderung des Stutzens während einer laufenden Fahrzeugproduktion aus wirtschaftlich-organisatorischen Gründen schwierig durchführbar. Soll zum Beispiel ein bereits konstruiertes System während der Fertigung auf eine deckellose Betankung umgestellt werden, kann der Stutzenabschluss auf eine Schnittstelle des Stutzens aufgesetzt werden.

Allerdings soll der Fahrer nicht in der Lage sein, den Stutzenabschluss selbst abzunehmen, vielmehr sollte dies der Fachwerkstatt überlassen bleiben. Um ein unbefugtes Entfernen zu vermeiden, kann daher der Stutzenabschluss mit einem Rückhaltemittel versehen sein, dass leicht auf den Einfüllstutzen aufsetzbar ist, aber nur unter Zerstörung oder zerstörungsfrei durch Einsatz eines Spezialwerkzeuges entfernt werden kann.

Ein solches Rückhaltemittel kann zum Beispiel von Federelementen gebildet sein, die bei oder nach Aufschrauben des Stutzenabschlusses auf das übliche Endstück eines Einfüllstutzens in Ausnehmungen nach der Art eines Sprengringes einrasten und nur über ein Spezialwerkzeug wieder zurückgezogen werden können, dass beispielsweise zwischen die Wandung des Einfüllstutzens und des Stutzenabschlusses einsetzbar ist, wobei das eingesetzte Werkzeug dann zwei Enden des offenen Sprengrings zusammenziehen kann und so den formschlüssigen Eingriff aufhebt.

Ein Merkmal der Erfindung ist, dass unabhängig von der konkreten Ausgestaltung des Stutzenabschlusses, dieser Stutzenabschluss und der Rohrstutzen zwei getrennte Bauteile bilden, die über eine besondere Verbindung miteinander verbindbar sind, so dass es möglich ist, den Stutzenabschluss ohne den Einfüllstutzen selbst auszutauschen. Dies hat den besonderen Vorteil, dass nach Aufnahme einer größeren Anzahl von mechanischen Teilen möglicherweise häufiger ein Reparaturfall im Bereich des Stutzenabschlusses auftreten kann und dieser ohne Austausch des gesamten Stutzens erledigt werden kann.

Weist beispielsweise der Stutzenabschluss Verriegelungsklappen mit einem Fehlbetankungsschutz auf, könnten diese mechanischen Teile beschädigt werden. Das Stutzenrohr selbst ist üblicherweise ein Blech-oder Kunststoffrohr, insbesondere ein Kunststoffrohr wird häufig auch mit einem Kunststofftank fest verschweißt. In jedem Fall ist der Austausch des gesamten Einfüllstutzens bis zum Tank hin vergleichsweise aufwändig, da dieser Bereich nur schwer und nur von der Fahrzeugunterseite aus zugänglich ist. Je nach Fahrzeugkonstruktion kann der Tank auch nur über den Innenraum mit Ausbau weiterer Teile zugänglich sein, so dass die Notwendigkeit besteht, einen Stutzenabschluss leichter und einfacher reparieren zu können als durch Austausch des gesamten Einfüllstutzens.

Hierzu weist, wie bei den bekannten handelsüblichen Bajonett- oder Schraubverschlüssen, der Einfüllstutzen eine lösbare Verbindung auf. Der Einfüllstutzen besteht aus dem Stutzenabschluss und dem eigentlichen Stutzenrohr, das zum Tank hin geführt ist und dort mit dem Tank lösbar oder fest verbunden sein kann. Die Verbindung zwischen Stutzenabschluss und Stutzenrohr erfolgt nun über eine Verbindung, die derart ausgestaltet ist, dass sie bevorzugt nur über ein Spezialwerkzeug lösbar ist. Ist es nicht gewünscht, eine Missbrauchsmöglichkeit auszuschließen, kann die Verbindung auch einfach lösbar ausgebildet sein.

Eine über ein Spezialwerkzeug lösbare Verbindung kann beispielsweise von federnden Rastelementen gebildet sein. Diese Rastelemente können auch hier nach der Art eines Sprengrings ausgebildet sein. So kann der Stutzenabschluss auf das Stutzenrohr aufgeschoben sein, wobei der Sprengring zwischen der Innenwandung des Stutzenabschlusses und der Außenwandung des Stutzens angeordnet sein kann. Eine zusätzliche Dichtung, etwa in Form eines Gummiringes, kann die erforderliche Dichtigkeit herstellen. Über ein Spezialwerkzeug können dann die Enden des Sprengringes zum Lösen zusammen- oder auseinander gedrückt werden.

Eine weitere Möglichkeit besteht darin, dass die federnden Elemente im Inneren des Stutzenabschlusses angeordnet sind und durch Ausnehmungen in der Wandung des Stutzenabschlusses in Verriegelungseinbuchtungen in der Innenwandung des Stutzenrohrs eingreifen. Diese federnden Elemente können dann von innen über das Spezialwerkzeug erfasst und nach innen zurückgezogen werden, um den Stutzenabschluss abziehen zu können. Auch alle anderen üblichen Verbindungsmittel sind natürlich möglich.

Der Stutzenabschluss weist einen Fehlbetankungsschutz auf, durch zwar noch nicht jede Fehlbetankung ausgeschlossen werden kann, dass Risiko jedoch deutlich minimiert wird. Weltweit ist es üblich, dass bleifreie Ottokraftstoffe mit Zapfpistolen gezapft werden, die einen geringeren Durchmesser des unteren Endes des Ausgaberohrs aufweisen als Dieselkraftstoffe. Somit kann erfindungsgemäß diese Tatsache genutzt werden, eine Entriegelung des Stutzenabschlusses bei Verwendung der falschen Zapfpistole zu vermeiden und es ist zumindest möglich zu verhindern, dass ein Fahrzeug mit Ottomotor mit Dieselkraftstoff und ein Fahrzeug mit Dieselmotor mit Ottokraftstoff betankt wird.

Sofern der Mineralölhandel weitere Zapfpistolenmodelle künftig verwenden sollte, wird natürlich eine weitere Erhöhung der Fehlersicherheit möglich werden. Im Idealfall kann bei Verwendung eines sortenspezifischen Durchmessers des Ausgaberohr jede Fehlbetankung bereits im Ansatz vermieden werden, was nicht nur zur Vermeidung von unnötigen Reparaturkosten sondern auch zur Entlastung der Umwelt beiträgt, dass Fehlmengen dann nicht mehr entsorgt werden müssen. Auch Mietwagenfirmen können dann darauf vertrauen, dass die Fahrzeuge nicht mehr vorsätzlich oder fahrlässig mit ungeeignetem Benzin betankt werden, um beispielsweise Kosten bei der Rückgabe zu sparen oder weil der Fahrer der jeweiligen Landessprachen nicht mächtig ist und aus Unwissenheit zur falschen Zapfpistole greift.

Wenn im Rahmen dieser Anmeldung der Begriff "deckellos" verwendet wird, meint dies natürlich nicht, dass der Einfüllstutzen keinen internen Deckel aufweist. Vielmehr ist hierunter zu verstehen, dass kein herkömmlicher Tankdeckel im üblichen Sinne mehr verwendet werden muss, aus Sicherheitsgründen möglicherweise aber könnte. Der Begriff "Rohrstück" soll im Rahmen dieser Anmeldung den Einlaufbereich des Stutzens beschreiben, der natürlich keine zylindrischen Querschnitt aufweisen muss, sondern jeden beliebigen, konstanten oder sich über die Tiefe des Stutzens verändernden Querschnitt aufweisen kann. Ferner soll der Anwendungsbereich der Erfindung nicht auf Tankdeckel beschränkt sein, obwohl die Anwendung im Folgenden als bevorzugte Verwendung beschrieben wird. Ein Einsatz ist prinzipiell bei allen Vorratsbehältern innerhalb und außerhalb der Fahrzeugtechnik möglich, im Rahmen des Kraftfahrzeugs insbesondere auch im Bereich des Einfüllstutzens für das Motor oder Getriebeöl.

Der so ausgebildete Stutzenabschluss ist bietet die Möglichkeit, die obere Einfüllöffnung zu verriegeln und diese Verriegelung nur dann aufheben zu können, wenn die "richtige" Zapfpistole angesetzt wird. Dies kann auf vielfältige Weise geschehen. Eine Möglichkeit besteht zum Beispiel darin, dass die Zapfpistole zwei gegenüberliegende Klemmbacken zur Seite drückt, die wiederum eine Schwenkplatte, die die obere Einfüllöffnung verdeckt oder von unten verschließt, verriegeln. Dabei sind bei den derzeit am häufigsten verwendeten Zapfsystemen folgende Fälle möglich:

1. Bei dem Versuch ein Fahrzeug mit Ottomotor fälschlicherweise mit Dieselkraftstoff zu betanken, wird die Zapfpistole der Dieselzapfsäule einen größeren Durchmesser aufweisen als die "erwartete" Zapfpistole der Zapfsäule für Ottokraftstoff. In diesem Fall ist die Zapfpistole zu groß, um in den Funktionsbereich des Einfüllstutzens eingesetzt zu werden, sie kann damit nicht die Klemmbacken nach außen drücken und der Bediener wird den Fehler daran erkennen, dass sich die obere Abdeckung nicht öffnen und die Zapfpistole nicht ein den Einfüllstutzen einführen lässt.

2. Bei dem Versuch ein Fahrzeug mit Dieselmotor fälschlicherweise mit Ottokraftstoff zu betanken, wird die Zapfpistole der Zapfsäule für den Ottokraftstoff einen kleineren Durchmesser aufweisen als die "erwartete" Zapfpistole der Dieselzapfsäule. Die Zapfpistole ist nun nicht dick genug und wird daher nicht in der Lage sein, gleichzeitig beide Klemmbacken zu berühren oder gar auseinanderzudrücken. Vielmehr wird maximal nur eine einzelne Klemmbacke erfasst, so dass die Verriegelung hiermit dann ebenfalls nicht gelöst werden kann, auch wenn in diesem Fall das freie Ende der Zapfpistole in den Funktionsbereich einsetzbar ist.

Eine vorteilhafte Ausgestaltung der Erfindung sieht als Funktionsbereich eine schiefe Ebene mit einem seitlich hervorstehenden Rand vor, wobei auf der schiefen Ebene das Ausgaberohr abgleiten kann. Diese schiefe Ebene stellt eine relativ zur Längsachse des Rohrstücks des Einfüllstutzens um einem Winkel α geneigte Abgleitfläche für die Zapfpistole dar, die die oberen Einfüllöffnung vor Freigabe der Verriegelung schützt.

Der Benutzer setzt die Zapfpistole zunächst etwas neben der eigentlichen Einfüllöffnung an den oberen Anfang der Abgleitfläche an und lässt dann das Ausgaberohr längs der Abgleitfläche gleiten. Durch diese Bewegung kann dann ein Mechanismus angetrieben werden, der die Entriegelung des Verschlussmechanismus bewirkt. Dies kann, wie oben bereits beschrieben, durch das Auseinanderdrücken der Klemmbacken erfolgen, wobei eine zu große Zapfpistole nicht zwischen den erhabenen Rand der schiefen Ebene einsetzbar ist und somit auf dem Rand abgleiten würde, damit aber nicht in Kontakt mit den Klemmbacken kommt.

Diese seitliche Last auf die äußere Mantelfläche des Ausgaberohrs kann jedoch die Zapfpistole einem Verschleiß unterliegen, da diese üblicherweise aus Aluminium gefertigt ist und somit wenig verschleißfest ist.

Eine andere Ausgestaltung drückt daher die Verriegelungsmittel gegen eine Rückstellfeder nach unten. Dies ist wesentlich Material schonender und erlaubt darüber hinaus die Verwendung längerer und besser geführter Federn. Auch hier kann ein erhabener Rand verhindern, dass eine zu große Zapfpistole die Verriegelungsmittel herunterdrücken kann, sofern dies notwendig sein sollte. Ein weiterer Vorteil des erhabenen Randes liegt in dem Schutz der Verriegelungsmittel vor unbeabsichtigtem Aufdrücken, etwa infolge eines Unfalls.

Bei Ansetzen des Ausgaberohres an die schiefe Ebene werden dann zum Beispiel zwei gegenüberliegend angeordnete Verriegelungsmittel heruntergedrückt, wobei dies dann bevorzugt dazu führt, dass dann erst ein Abgleiten des Ausgaberohres auf der Abgleitfläche möglich wird.

Hierzu ist ein durch die Verriegelung festgelegtes und über den beschriebenen Mechanismus entriegelbares Schiebeelement vorgesehen, dass neben und oberhalb der Abgleitfläche seitlich verschiebbar gelagert ist. Dieses Schiebeelement wird nach Niederdrücken der Verriegelungsmittel durch das Ausgaberohr seitlich verdrängt, wobei hierdurch auch das Ausgaberohr der Zapfpistole zusammen mit der weiteren Abwärtsbewegung weiter zur Seite geschoben wird bis das Schiebeelement die obere Einfüllöffnung vollständig freigibt. Nachfolgend kann das Ausgaberohr dann in den Rohrstutzen eingeführt werden und dort die untere Dichtklappe niederdrücken.

Weitere Merkmale des erfindungsgemäßen Stutzenabschlusses sind Über- und Unterdruckventile, die die untere Dichtklappe und, sofern die obere Abdeckung ebenfalls dichtend ausgebildet ist, auch diese obere Abdeckung bei Auftreten von kritischen Drücken, etwa durch Wärmedehnungen oder die motorseitige Entnahme von Kraftstoff aus dem Tank, einen entsprechenden Druckausgleich bewirken.

Über der unteren Dichtklappe kann ferner ein Wasserkanal angeordnet sein, der eindringendes Wasser oder Kondenswasser ableitet, damit es bei der nächsten Öffnung der unteren Dichtklappe nicht in den Tank gelangt.

Eine weitere bevorzugte Ausgestaltung der Erfindung weist eine zusätzliche Sicherung gegen Undichtigkeiten im Unfallfalle auf. Auch diese Sicherung ist unabhängig von der speziellen Ausgestaltung des Stutzenabschlusses, wie oben beschrieben und in den Ansprüchen beansprucht, einsetzbar. Erforderlich hierfür ist lediglich die Tatsache, dass ein Doppelverschluss über eine obere und eine untere Dichtklappe vorliegt.

Im Falle eines Unfalles besteht immer die Möglichkeit, dass der Stutzenabschluss in Folge einer sich verformenden Kante oder eines aufprallenden Gegenstandes mit einer unzulässig hohen Querkraft beaufschlagt wird. In diesem Fall wird die Querkraft in den Stutzen eingeleitet, der ohne besondere Vorkehrungen möglicherweise an einer nicht zu kontrollierenden Stelle brechen könnte. Insbesondere weil die Stutzengeometrie im Wesentlichen an die Form des Unterbodens und die Position des Stutzenabschlusses einerseits und des Kraftstoffbehälters andererseits angepasst ist, wird sich irgendwo im Verlauf des Stutzenrohres eine Schwachstelle in Folge einer Änderung der Geometrie ergeben, die möglicherweise als Bruchstelle in Erscheinung treten könnte.

Um ein unteres Abbrechen des Stutzenrohres zu vermeiden, da dies möglicherweise zum Austritt von Treibstoff führen könnte, ist das Stutzenrohr aus einem geeigneten Material gefertigt, das einerseits bruchfest ist und andererseits eine hinreichende Flexibilität aufweist, um einen gewissen, unfallbedingten Verformungsgrad ohne Leckage zu überstehen. Eine noch bessere Sicherheit lässt sich dadurch erreichen, dass zwischen der oberen und der unteren Dichtklappe eine Sollbruchstelle angeordnet wird. Diese Sollbruchstelle bewirkt, dass ein in die Wandung des Stutzenabschlusses eingeleitetes Bruchmoment dazu führt, dass der obere Teil des Stutzenabschlusses abbrechen kann, ohne dass der untere Teil des Stutzenabschlusse oder gar das darunter liegende Stutzenrohr in Mitleidenschaft gezogen wird. In diesem Fall ist immer noch die untere Dichtklappe vorhanden, die den Stutzenabschluss ausreichend abdichtet, um Austreten von Kraftstoff selbst bei verunfalltem Fahrzeug zu verhindern.

Die Sollbruchstelle kann bevorzugt durch ein in der Wandung des Stutzenabschlusses zwischen oberer und unterer Dichtklappe angeordnete Vertiefung vorgesehen sein. Diese kann einfach in das Kunststoffmaterial des Stutzenabschlusses eingeprägt werden oder bereits bei Herstellung vorgesehen werden. Oberhalb und unterhalb der Vertiefung können zusätzliche Materialverstärkungen vorgesehen werden, um den Effekt der Sollbruchstelle zu verstärken.

Alternativ kann der Stutzenabschluss auch zweiteilig ausgebildet sein, so dass ein oberer Teil mit der oberen Dichtklappe in einen unteren Teil mit der unteren Dichtklappe eingesteckt ist, wobei die Steckverbindung über eine Dichtung, beispielsweise über einen Gummiring, abgedichtet ist. Der obere und der untere Teil des Stutzenabschlusses weisen dann jeweils einen rohrförmigen Grundkörper auf, die unter Einschluss des Gummirings ineinander gesteckt sind.

Hier kann die Sollbruchstelle dadurch realisiert werden, dass die Steckverbindung aufgelöst werden kann. Damit dies nicht irrtümlich geschieht, ist die Steckverbindung bevorzugt so ausgestaltet, dass nach Montage des Stutzenabschlusses über Rastzungen der obere und der untere Teil des Stutzenabschlusses untrennbar miteinander verkeilt sind, wobei bei Auftreten der kritischen Bruchkraft die Rastzungen brechen und der obere Teil abgezogen werden kann. Bei dieser Ausgestaltung kann der Überlappungsbereich des oberen und unteren Teils des Stutzenabschlusses recht gering gehalten bleiben, um bei Auftreten der Querkraft ein sicheres Lösen im Bereich der Sollbruchstelle zu gewährleisten.

Weitere Merkmale und Vorteile der Erfindung ergeben sich aus den Unteransprüchen und aus der nachfolgenden Beschreibung eines bevorzugten Ausführungsbeispiels der Erfindung anhand der Zeichnungen.

### Kurze Beschreibung der Zeichnungsfiguren

In den Zeichnungen zeigt:

Figur 1 eine Seitenansicht im Schnitt auf einen Stutzenabschluss,

Figur 2 die Einzelheit "Z" aus Figur 1,

Figur 3 eine weitere Ausgestaltung eines Stutzenabschlusses in einer Draufsicht,

Figur 4 einen Stutzenabschluss mit einer Sollbruchstelle in einer Seitenansicht im Schnitt,

Figur 5 einen Einfüllstutzen mit dem oberen Teil eines Stutzenrohrs und einem darauf befestigten Stutzenabschluss und

Figur 6 eine Ausgestaltung des oberen Teiles eines Stutzenabschlusses mit Verriegelungsstift zur Verriegelung über eine Zentralverriegelung.

### Beschreibung der Ausführungsarten

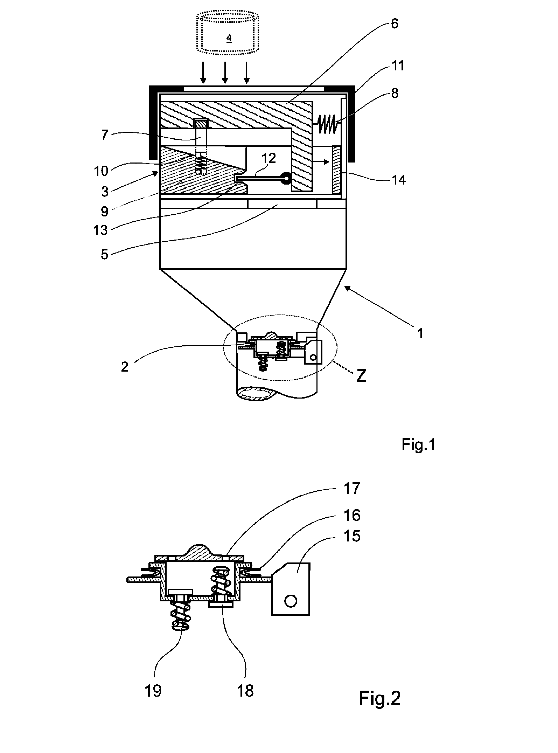

Der in Figur 1 dargestellte Stutzenabschluss wird von einem Rohrstück gebildet, dessen Querschnitt sich in Richtung der Öffnung zunächst konisch erweitert. Unterhalb des erweiternden Abschnittes ist die untere Dichtklappe 2 vorgesehen, die den Stutzen abdichtet. Hierzu ist die Dichtklappe über eine Feder gegen eine Dichtfläche (hier nicht dargestellt) angestellt. Weiter weist der Stutzenabschluss die als Einzelheit "Z" in Figur 2 in einer vergrößerten Darstellung wiedergegebenen Über- und Unterdruckventile sowie einen hier ebenfalls nicht dargestellten Wasserablauf auf, über den eindringendes Wasser abgeleitet werden kann.

Im oberen Bereich ist zunächst die obere Einfüllöffnung 5 vorgesehen, durch die das Ausgaberohr 4 der Zapfpistole in den Stutzen eingeführt werden kann, das dann bei weiterem Eindringen die untere Dichtklappe 2 öffnet. Über der oberen Einfüllöffnung 5 ist ein Verschlussmechanismus 3 angeordnet, der ohne Öffnung desselben ein Einführen der Zapfpistole verhindert.

Um Fehlbetankungen nun zu minimieren oder möglichst zu vermeiden soll nun dieser Verschlussmechanismus 3 nur dann geöffnet werden können, wenn die "richtige" Zapfpistole, also die Zapfpistole zum Einfüllen geeigneten Treibstoffs angesetzt wird.

Hierzu ist in den oberen Stutzenabschnitt des Rohrstücks 1 ein Ringelement 14 eingesetzt, in dem wiederum ein Schiebeelement rechtwinklig zur Stutzenachse verschiebbar geführt ist. Das Schiebeelement weist eine U-förmige Form auf, wobei es ebenso auch als rundum geschlossenes Element ausgebildet sein könnte. Wesentlich ist lediglich hier, dass es einen Durchlass aufweist, durch den das Ausgaberohr 4 hindurch gesteckt werden kann.

Durch das durchgesteckte Ausgaberohr 4 werden nun Verriegelungsmittel 7 niedergedrückt, die mit oberen Bereichen formschlüssig in Ausnehmungen in dem Schiebeelement eingreifen. Durch das Niederdrücken geraten nun die Verriegelungsmittel 7 außer Eingriff, das Schiebeelement wird so freigegeben und kann dann in seitliche Richtung verschoben werden.

Unterhalb des Schiebeelementes ist eine schiefe Ebene als Abgleitfläche 10 ausgebildet, die in die innere Mantelfläche des Ringelementes 14 eingearbeitet ist. Diese Abgleitfläche 10 ist um einen Winkel α relativ zur Stutzenachse des Rohrstücks 1 geneigt und bewirkt einen seitlichen Versatz des durch das Schiebeelement eingesteckten Ausgaberohrs 10, wenn dieses weiter in den Rohrstutzen 1 eingeführt wird.

Durch den seitlichen Versatz wird das Ausgaberohr 4 nun gegen das Schiebeelement gedrückt, was wiederum ein seitliches Wegschieben des Schiebeelements bewirkt, bis der Bereich oberhalb der oberen Einfüllöffnung vollständig für das Einschieben der Zapfpistole freigegeben ist. Diese Entriegelung und das nachfolgende Verschieben des Schiebeelementes ist jedoch nur dann möglich, wenn die beiden gegenüberliegenden Verriegelungsmittel 7 durch den unteren Rand der Zapfpistole niedergedrückt werden. Ist diese nicht groß genug, weil der Durchmesser des Ausgaberohres 10 zu klein ist, kann entweder kein oder nur ein Verriegelungsmittel 7 niedergedrückt werden, was die Verriegelung aber nicht aufhebt.

Das Schiebeelement ist so ausgebildet, dass es nach dem Verschieben auch dann noch die Verriegelungsmittel 7 unten hält, wenn der untere Rand der Zapfpistole seitlich nach recht bewegt und nicht mehr oberhalb der Verriegelungsmittel 7 angeordnet ist. In diesem Stadium drückt der linke Bereich des Schiebeelementes die Verriegelungsmittel 7 herunter.

Alternativ zu den beiden Verriegelungsmitteln 7 können natürlich auch weitere Verriegelungsmittel 7 verwendet werden. Wichtig ist nur, dass die nicht geeignete Treibstoffsorte über eine Zapfpistole verabreicht wird, die nicht alle Verriegelungsmittel 7 betätigen kann. Das Herunterdrücken der Verriegelungsmittel 7 hat den besonderen Vorteil, dass ein Verschleiß der Zapfpistole weitgehend ausgeschlossen ist. Insbesondere können keine seitlichen Riefen eingetrieben werden.

Bei der dargestellten bevorzugten Ausgestaltung sind die Verriegelungsmittel 7 jeweils von einem formschlüssig in eine Ausnehmung in der obere Abdeckung 6 eingreifenden Arretierstift gebildet, der gegen die Kraft einer Sicherungsfeder 9 durch das freie Ende des Ausgaberohrs 4 nach unten verlagerbar ist. Hierdurch "rastet" der Arretierstift aus der Ausnehmung in dem als obere Abdeckung eingesetzten Schiebeelement aus.

Das Schiebeelement weist im Sinne dieser Sicherung einen Sperrbereich auf, was nichts anderes heißt, als dass es in Verschlussstellung mit einem Teil seines Körpers oberhalb der oberen Einfüllöffnung angeordnet ist. Erst durch das seitliche Verschieben wird diese dann freigeben. Die schiefe Abgleitfläche 10 weist insbesondere eine Schiefstellung relativ zur Achse des Rohrabschnitts 1 von 20° bis 80°, bevorzugt von 35° bis 55° und, wie hier dargestellt weiter bevorzugt von 45° auf.

Bevorzugt ist, wie hier gezeigt, der Verschlussmechanismus über Abdeckkappe 11 geschützt, die ein Langloch zum Einstecken des Ausgaberohrs 4 aufweist, wobei die Breite des Langlochs etwas größer als der Durchmesser des Ausgaberohrs 4 ist und die Länge des Langlochs im Wesentlichen dem Verschiebeweg des Schiebeelementes entspricht.

Oberhalb der oberen Einfüllöffnung 5 ist hier eine zusätzliche Verschlussklappe 12 vorgesehen, die einen Diebstahlschutz und eine weitere Dichtung bewirkt. Hierzu ist sie gelenkig an dem Schiebeelement angeordnet wird mit diesem verschoben. An der gegenüberliegenden Seite greift sie in eine Eingriffsnut 13 ein, die die zusätzliche Verschlussklappe 12 im geschlossenen Zustand festlegt. Eine Rückstellfeder stellt nach Abziehen der Zapfpistole die Klappe 12 wieder zurück, damit diese dann bei Zurückgleiten des Schiebeelementes wieder in die Eingriffsnut 13 eingreifen kann.

Die Verriegelungsmittel können zusätzlich über die Zentralverriegelung des Kraftfahrzeuges derart blockierbar ist, dass eine Entriegelung nur bei in Öffnungsstellung befindlicher Zentralverriegelung möglich ist. Hierzu kann zum Beispiel, wie auch schon bei der Sicherung bekannter Tankklappen, ein elektromotorisch getriebener Dorn eine Bewegung des Schiebeelementes unterbinden.

Schließlich ist der Stutzenabschluss als eigenständiges Bauteil zur Verbindung mit einem bekannten Rohrstutzen ausgebildet. Dieses eigenständige Bauteil könnte mit dem meist aus Kunststoff gefertigten Rohrabschnitt verschweißt werden, erfindungsgemäß wird es aber über eine lösbare Verbindung oder auch die handelsübliche Verbindung, die bisher für das Aufsetzen und Befestigen eines Tankdeckel genutzt wurde, mit dem Stutzen verbunden werden. Dies hat den besonderen Vorteil, dass keine Veränderung an dem Stutzen notwendig ist, wenn ein Fahrzeug auf die deckellose Betankung umgerüstet wird. Bevorzugt weist er dann eine Abnahmesicherung auf, die nur mittels eines Werkzeuges lösbar ist, damit der Fahrer selbst den Tankverschluss nicht mehr manipulieren kann.

In Figur 2 ist die untere Dichtklappe 2 in einer vergrößerten Darstellung wiedergegeben. Die Dichtklappe 2 besteht aus einer an einem Schwenklager 15 angeordneten Schwenkklappe, die durch die Kraft einer Verschlussfeder gegen einen Lagerrand im Rohrstutzen 1 des Einfüllstutzens unter Einschluss einer Dichtung 16 gedrückt wird.

Im oberen Teil weist die Dichtklappe 2 einen Druckbereich auf, gegen den sich der untere Rand der Zapfpistole abstützen kann. Zum Zentrieren der Zapfpistole ist im mittleren Bereich eine nach oben hervorspringende Erhöhung vorgesehen. Der Druckbereich weist zumindest einen, im gezeigten Beispiel zwei Durchlässe 17 auf, über die Druck in den Innenraum der Dichtklappe 2 eintreten können.

Im unteren Bereich ist die Dichtklappe 2 mit einem Überdruckbypass 19 und einem Unterdruckbypass 18 versehen, über die Unter- bzw. Überdrücke kompensiert werden können. Hierfür können alle Arten von Druckventilen verwendet werden, wobei im gezeigten Ausführungsbeispiel ein federbelasteter Stößel verwendet wird, der sich mit einem oberen Tellerrand auf einer Seite des Dichtklappenbodens abstützt und mit einem Stielkörper unter Belassung einer Atmungsöffnung durch eine Durchgangsöffnung im Dichtklappenboden hindurchgeführt ist, wobei zwischen dem freien Ende des Stielkörpers und dem Dichtklappenboden eine Feder eingespannt ist. Die Abdichtung erfolgt hier über den Tellerrand, der zur Betätigung des jeweiligen Bypass nach Überwinden der Federkraft von dem Dichtklappenboden abhebt.

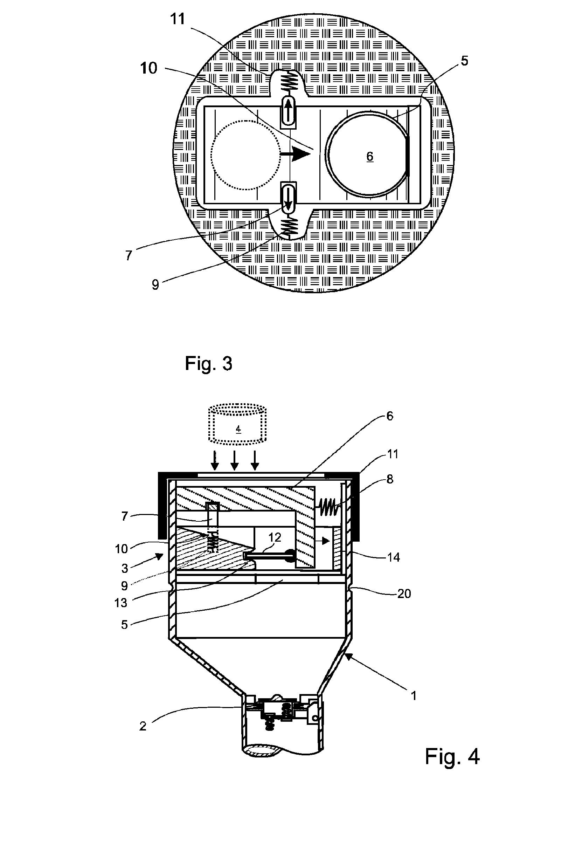

In Figur 3 ist eine weitere Ausgestaltung des Stutzenabschlusses dargestellt, die an Stelle der nach unten zu drückenden Verriegelungsmittel 7 aufweist, die von dem Ende des Ausgaberohrs 4 der Zapfpistole seitlich verdrängt werden. Diese Verdrängung kann wie im dargestellten Ausführungsbeispiel unmittelbar durch Kontakt mit der Zapfpistole erfolgen, es ist jedoch auch möglich, dass die Zapfpistole in einen (nicht gezeigten) Schiebekörper eingesetzt werden kann, der zusammen mit dem Ende des Ausgaberohrs 4 nach unten geschoben werden muss. Dieser Schiebekörper weist dann eine Durchgangsöffnung auf, durch die bei Erreichen der Endposition die Zapfpistole in den Stutzenabschluss eingeschoben werden kann.

In Figur 4 ist ein erfindungsgemäßer Stutzenabschluss mit einer Sollbruchstelle 20 dargestellt, die im vorliegenden Fall von einer von außen in die Stutzenwandung eingeprägten Vertiefung gebildet ist, so dass sich hier eine Materialschwächung ergibt. Diese Sollbruchstelle 20 hat den Sinn, dass bei Auftreten einer unzulässigen Querkraft der obere Bereich des Stutzenabschlusses unter Aufrechterhaltung der Dichtwirkung der unteren Dichtklappe 2 abbrechen kann und so trotz einer unzulässig hohen Querkraft die Dichtwirkung des Einfüllstutzens im Wesentlichen aufrechterhalten bleibt.

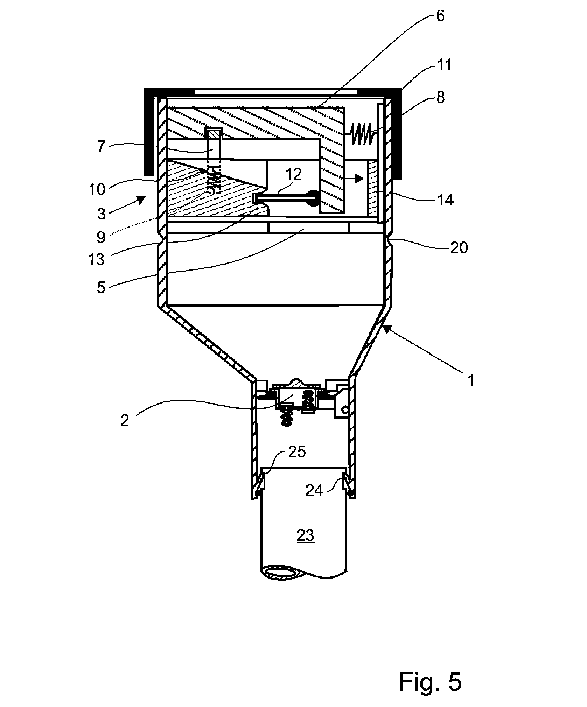

Figur 5 zeigt die Verbindung eines Stutzenabschlusses mit einem Rohrstutzen 23 eines Tankstutzensystems, das zweiteilig ausgebildet ist, wobei jedoch der Stutzenabschluss nur unter Zerstörung des Verbindungsmittels oder mittels eines Spezialwerkzeugs von dem Rohrstutzen 23 gelöst werden kann.

Zur Verbindung mit dem Rohrstutzen 23 wird der Stutzenabschluss auf den Rohrstutzen 23 aufgeschoben, wobei federnde Halteelemente 22 in Ausnehmungen des Rohrstutzens 23 derart einrasten, dass ein Abziehen nur unter Zerstörung der federnden Halteelemente 24 oder durch Einführen des Werkzeugs möglich ist. Die eingerasteten federnden Halteelemente 22 hintergreifen zur formschlüssigen Verbindung mit den Enden Haltekanten 24 des Rohrstutzens 23, so dass der Stutzenabschluss fest gehalten ist. Eine (hier nicht dargestellte) Dichtung dichtet die Verbindung ab.

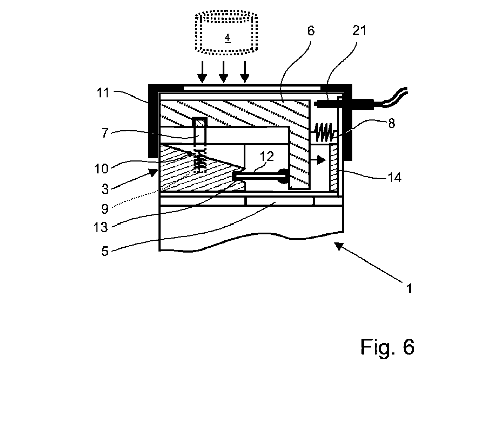

In Figur 6 ist eine weitere Ausgestaltung des erfindungsgemäßen Einfüllstutzens dargestellt, bei der ein Verriegelungsstift 21 vorgesehen ist, der über die Schaltorgane einer zentralen Schließanlage des Kraftfahrzeugs betätigbar ist. Dieser dornförmige Verriegelungsstift 21 bezieht den Stutzenabschluss mit in die Zentralverriegelung des Kraftfahrzeugs in, indem er bei verschlossenem Zustand gegen die obere Abdeckung 6 drückt, so dass diese nicht verschiebbar ist. Dies hat die Folge, dass hier die zusätzliche Verschlussklappe 12, die im dargestellten Ausführungsbeispiel die obere Dichtklappe bildet, nicht aus dem Eingriff mit der Verriegelungsnut 13 kommen kann, somit die obere Dichtklappe in Form der Verriegelungsklappe 12 verschlossen bleibt, sofern der Verriegelungsstift 21 eingedrückt bleibt. Erst durch Öffnen der Zentralverriegelung wird dieser Verriegelungsstift 21 zurückgezogen, so dass das Betankungssystem durch die Zentralverriegelung freigegeben wird.

Der Verriegelungsstift 21 erlaubt auch weitere zusätzliche Funktionen. So kann beispielsweise bei laufendem Motor von der Fahrzeugelektrik selbsttätig der Verriegelungsstift gegen die obere Abdeckung 6 angestellt werden, so dass ein Betanken des Fahrzeugs nur bei abgeschaltetem Motor möglich ist. Über die gleiche Funktion lässt sich auch das Betanken eines Fahrzeugs bei eingeschalteter Fremdheizung, insbesondere einer Standheizung, vermeiden. Dies erhöht die Sicherheit vor fahrlässigen Missachtungen von Vorschriften durch den Fahrer.

Ferner kann die Funktion des Verriegelungsstiftes 21 auch an Crashsensoren oder sonstige Elemente der Fahrdynamikregelung gekoppelt sein, so dass rechtzeitig vor Verunfallen des Fahrzeugs der Stutzenabschluss nochmals verschlossen wird, so dass auch der an sich schon unmögliche Fall eines Wegdrückens der oberen Abdeckung 6 durch einen Fremdkörper oder eine sich verformende Karosseriekante zusätzlich vermeidbar ist.

Selbstverständlich kann der Verriegelungsstift 21 auch an jeder anderen Position des Deckels angeordnet sein, es ist sogar möglich, dass der Verriegelungsstift scheibenförmig ausgebildet ist und sich als zusätzliche Dichtklappe in Querrichtung vor die Rohröffnung bewegen lässt.

Über den Verriegelungsstift 21 kann nun die Verriegelung einer üblicherweise bei einem Kraftfahrzeug zur Abdeckung des Tankstutzens vorgesehenen Schwenkklappe entbehrlich werden. Dies ermöglicht es zum einen, erneut die bereits früher vorgenommene Gestaltung der Karosserie mit sichtbarem Stutzenabschluss, bei dem beispielsweise die obere Abdeckung zur Erzeugung eines interessanten optischen Effektes aus Edelstahl gefertigt sein kann, und erspart darüber hinaus das Verschieben des Verriegelungsstiftes 21 gegen einen relativ weit außen liegenden Blechbereich der Karosserie, der möglicherweise hierdurch beschädigt werden könnte, wenn etwa die Schwenkklappe nicht vollständig geschlossen ist und der Verriegelungsstift 21 sich nicht in die vorgesehene Öffnung verschiebt, sondern gegen deren Rand drückt.

In Verbindung mit der Sollbruchstelle 20 kann der Verriegelungsstift 21 auch im Bereich der unteren Dichtklappe 2 vorgesehen werden, entweder als einziger Verriegelungsstift 21 oder als zusätzlicher Verriegelungsstift 21. Dies hätte den Vorteil, dass durch Abbrechen des oberen Stutzenabschlusses die Verriegelung nicht aufgehoben wird, insbesondere wenn in Verbindung mit der Crash-Sensorik ein Verriegeln selbsttätig erfolgen soll, würde dies nicht durch Abbrechen des verriegelten Teiles wieder ausgehoben werden.

Für die Zentralverriegelungsfunktion des Stutzenabschlusses ist erforderlich, dass ein Verriegelungsstift 21 vorgesehen ist, eine der schwenkbaren Dichtklappen in ihrer Schwenkbewegung fest liegt oder der einen längs beweglichen Funktionsbereich des Stutzenabschlusses in seiner Beweglichkeit blockiert war, sofern durch die Längsbeweglichkeit die Zugänglichkeit in das Innere des Rohrstutzens 23 hergestellt wird.

**Bezugszeichenliste:**

1 Rohrstück

2 Untere Dichtklappe

3 Verschlussmechanismus

4 Ausgaberohr

5 Obere Einfüllöffnung

6 Obere Abdeckung

7 Verriegelungsmittel

8 Verschlussfeder

9 Sicherungsfeder

10 Abgleitfläche

11 Abdeckkappe

12 Zusätzliche Verschlussklappe

13 Verriegelungsnut

14 Haltering

15 Schwenklager der Dichtklappe

16 Dichtung der Dichtklappe

17 Durchlass in dem Druckbereich der Dichtklappe

18 Unterdruck Bypass

19 Überdruck Bypass

20 Sollbruchstelle

21 Verriegelungsstift

22 Federnde Halteelemente

23 Rohrstutzen

24 Haltekante

α Neigungswinkel der Abgleitfläche relativ zur Längsachse des Rohrstücks

## Patentansprüche

1. Einfüllstutzen eines Tanks eines Kraftfahrzeugs mit einem, mit dem Tank verbundenen Rohrstutzen (23) und einem deckellos verschließbaren Stutzenabschluss, wobei der Stutzenabschluss über eine von federnden Halteelementen (22) gebildete Verbindung mit dem Rohrstutzen (23) verbunden ist und die Halteelemente (22) zwischen dem Stutzenabschluss und dem Rohrstutzen (23) angeordnet sind und bei Aufschieben des Stutzenabschlusses auf den Rohrstutzen (23) verdrängbar sind und in einer Gebrauchsposition Rückhaltekanten (24) hintergreifend in Aufnahmen zur Bildung einer formschlüssigen Verbindung federnd eingreifen sowie derart ausgestaltet sind, dass sie bei Belastung in die entgegen gesetzte Richtung selbsttätig verkeilen, **dadurch gekennzeichnet, dass** zur Bildung einer Sicherung gegen Befüllen mit ungeeignetem Kraftstoff im Stutzenabschluss eine obere Abdeckung (6) vorgesehen ist, die im geschlossenen Zustand durch wenigstens ein Verriegelungsmittel (7) blockiert ist und das Verriegelungsmittel (7) derart ausgebildet ist, dass in Abhängigkeit der Form des Ausgaberohrs (4) der Zapfpistole nur bei Befüllung mit geeignetem Kraftstoff entriegelbar ist und dass der Stutzenabschluss über eine nicht ohne Zerstörung oder ohne Spezialwerkzeug lösbare Verbindung mit dem Rohrstutzen (23) verbunden ist.

2. Einfüllstutzen eines Tanks eines Kraftfahrzeugs mit einem deckellos verschließbaren Stutzenabschluss nach Anspruch 1, **dadurch gekennzeichnet, dass** die lösbare Verbindung federnde Halteelementen (22) aufweist, die zwischen dem Stutzenabschluss und dem Rohrstutzen (23) angeordnet sind, wobei die federnden Halteelemente (22) bei Aufschieben des Stutzenabschlusses auf den Rohrstutzen (23) verdrängbar sind und in einer Gebrauchsposition Rückhaltekanten (24) hintergreifend in Aufnahmen zur Bildung einer formschlüssigen Verbindung federnd eingreifen und derart ausgestaltet sind, dass sie bei Belastung in die entgegen gesetzte Richtung selbsttätig verkeilen.

3. Einfüllstutzen eines Tanks eines Kraftfahrzeugs mit einem deckellos verschließbaren Stutzenabschluss nach Anspruch 2, **dadurch gekennzeichnet, dass** die federnden Halteelemente (22) derart einzurasten vermögen, dass sie nur durch Einführen des Werkzeuges oder unter Zerstörung der Halteelemente (22) abziehbar sind.

4. Einfüllstutzen eines Tanks eines Kraftfahrzeugs mit einem deckellos verschließbaren Stutzenabschluss nach einem der vorhergehenden Ansprüche, **dadurch gekennzeichnet, dass** er einen, einen Einsteckbereich für eine Zapfpistole bildenden, von einer Seitenwandung umgebenen, oberen Eintrittsraum, eine in dem Eintrittsraum angeordnete untere Dichtklappe (2) und einen oberhalb der unteren Dichtklappe (2) angeordneten Verschlussmechanismus (3) aufweist.

5. Einfüllstutzen eines Tanks eines Kraftfahrzeugs mit einem deckellos verschließbaren Stutzenabschluss nach Anspruch 4, **dadurch gekennzeichnet, dass** wobei der Verschlussmechanismus (3) eine obere Einfüllöffnung (5) und zumindest eine, die obere Einfüllöffnung (5) im geschlossenen Zustand wenigstens partiell überdeckende obere Abdeckung (6) aufweist, und derart ausgebildet ist, dass die obere Abdeckung (6) durch Einführen eines Ausgaberohrs (4) einer Zapfpistole in den Eintrittsraum zur Freigabe der oberen Einfüllöffnung (5) verdrängt wird, um das Einschieben des Ausgaberohrs (4) durch die obere Einfüllöffnung (5) und die untere Dichtklappe (2) zu ermöglichen, und wobei zur Bildung einer Sicherung gegen Befüllen mit ungeeignetem Kraftstoff die obere Abdeckung (6) im geschlossenen Zustand durch wenigstens ein Verriegelungsmittel (7) blockiert ist und das Verriegelungsmittel (7) derart ausgebildet ist, dass es in Abhängigkeit der sortenspezifischen Form des Ausgaberohrs (4) der Zapfpistole nur bei Befüllung mit geeignetem Kraftstoff entriegelbar ist.

6. Einfüllstutzen eines Tanks eines Kraftfahrzeugs mit einem deckellos verschließbaren Stutzenabschluss nach Anspruch 5, **dadurch gekennzeichnet, dass** der Stutzenabschluss auf eine übliche Befestigung für einen Tankdeckel an einem Tankstutzen, insbesondere auf ein Gewinde oder ein Bajonett, aufschraubbar ist.

7. Einfüllstutzen eines Tanks eines Kraftfahrzeugs mit einem deckellos verschließbaren Stutzenabschluss nach dem vorhergehenden Anspruch, **dadurch gekennzeichnet, dass** er eine Abnahmesicherung aufweist, die nur mittels eines Werkzeuges lösbar ist.

8. Einfüllstutzen eines Tanks eines Kraftfahrzeugs mit einem deckellos verschließbaren Stutzenabschluss nach dem vorhergehenden Anspruch, **dadurch gekennzeichnet, dass** die als Abschraubsicherung ausgebildete Abnahmesicherung von Federelementen gebildet ist, die bei Aufsetzen des Stutzenabschluss auf den Tankstutzen eine Fläche federnd hintergreifen die Abnahme blockieren, wobei die Federelemente über ein Greifwerkzeug greifbar und zum Deaktivieren der Abnahmesicherung rückziehbar sind.

9. Einfüllstutzen eines Tanks eines Kraftfahrzeugs mit einem deckellos verschließbaren Stutzenabschluss nach einem der Ansprüche 5 bis 8, **dadurch gekennzeichnet, dass** der Eintrittsraum als Rohrstück (1) mit konstantem oder veränderlichen Querschnitt ausgebildet ist und das Verriegelungsmittel (7) von einem Sperrmittel gebildet ist, dass derart gelagert ist, dass es von dem Ausgaberohr (4) zum Entriegeln der oberen Abdeckung (6) aus einer Blockierstellung heraus verdrängbar ist.

10. Einfüllstutzen eines Tanks eines Kraftfahrzeugs mit einem deckellos verschließbaren Stutzenabschluss nach einem der Ansprüche 1 bis 8, **dadurch gekennzeichnet, dass** der Verschlussmechanismus (3) eine obere Einfüllöffnung (5) aufweist, **dadurch gekennzeichnet, dass** zur Bildung der Sicherung gegen Befüllen mit ungeeignetem Kraftstoff die Zapfpistole zwei gegenüberliegende Klemmbacken zur Seite drückt, die wiederum eine Schwenkplatte, die die obere Einfüllöffnung (5) verdeckt oder von unten verschließt, verriegeln.

11. Einfüllstutzen eines Tanks eines Kraftfahrzeugs mit einem deckellos verschließbaren Stutzenabschluss nach Anspruch 5, **dadurch gekennzeichnet, dass** zwei oder mehr Verriegelungsmittel (7) vorgesehen sind, die in einem Abstand (a) zu einander angeordnet sind, wobei der Abstand (a) derart groß ist, dass von dem Ausgaberohr (4) einer Zapfpistole mit einem ersten Durchmesser, insbesondere einer Zapfpistole für Dieselkraftstoff, beide Verriegelungsmittel (7) entriegelbar sind, während von einer Zapfpistole mit einem relativ zum ersten Durchmesser kleineren, zweiten Durchmesser, insbesondere einer Zapfpistole für bleifreien Ottokraftstoff, keines oder nur ein Verriegelungselement (7) entriegelbar ist.

12. Einfüllstutzen eines Tanks eines Kraftfahrzeugs mit einem deckellos verschließbaren Stutzenabschluss nach Anspruch 5, **dadurch gekennzeichnet, dass** zwei gegenüberliegende Verriegelungsmittel (7) vorgesehen sind, die zum Entriegeln der oberen Abdeckung (6) von dem freien Ende eines Ausgaberohrs (4) mit geeignetem Durchmesser verdrängbar sind.

13. Einfüllstutzen eines Tanks eines Kraftfahrzeugs mit einem deckellos verschließbaren Stutzenabschluss nach Anspruch 5, **dadurch gekennzeichnet, dass** oberhalb der oberen Einfüllöffnung (5) eine zusätzliche Verschlussklappe (12) vorgesehen ist, die durch das Ausgaberohr (4) gegen eine Federkraft aufdrückbar ist.

14. Einfüllstutzen eines Tanks eines Kraftfahrzeugs mit einem deckellos verschließbaren Stutzenabschluss nach Anspruch 5, **dadurch gekennzeichnet, dass** der Stutzenabschluss eine, von einer umlaufenden Nut gebildete Sollbruchstelle (20) aufweist, die zwischen einem oberen, deckellosen Verschlussmechanismus (3) und der unteren Dichtklappe (2) in die Wandung eingeprägt ist.
